# EUROPEAN PATENT SPECIFICATION

(11) **EP 3 112 671 B1**
(45) Date of publication and mention of the grant of the patent: **04.05.2022**
(21) Application number: 16176262.0
(22) Date of filing: 24.06.2016
(51) Int. Cl.: F03D 1/06

(54) **MODULAR WIND TURBINE ROTOR BLADE**
MODULARES WINDTURBINENROTORBLATT
PALE DE ROTOR DE TURBINE ÉOLIENNE MODULAIRE

(30) Priority: 29.06.2015 US 201514753137
(43) Date of publication of application: 04.01.2017
(73) Proprietor: General Electric Company, Schenectady, NY 12345 (US)
(72) Inventor: CARUSO, Christopher Daniel, Greenville, SC South Carolina 29615 (US); YARBROUGH, Aaron, Greenville, SC South Carolina 29615 (US); HYNUM, Daniel Alan, Greenville, SC South Carolina 29615 (US); TOBIN, James Robert, Greenville, SC South Carolina 29615 (US)
(74) Representative: ZBM Patents - Zea, Barlocci & Markvardsen

(56) References cited:
- EP-A1- 2 716 907
- EP-A2- 2 343 712
- US-A1- 2010 143 143
- US-A1- 2011 103 962
- US-A1- 2011 142 667
- US-A1- 2014 140 855

## Description

The present invention relates to a modular rotor blade for a wind turbine.

Wind power is considered one of the cleanest, most environmentally friendly energy sources presently available, and wind turbines have gained increased attention in this regard. A modern wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves. The spar caps may be constructed of various materials, including but not limited to glass fiber laminate composites and/or carbon fiber laminate composites.

Such rotor blades, however, are not without issues. For example, the bond lines of typical rotor blades are generally formed by applying a suitable bonding paste or compound along the bond line with a minimum designed bond width between the shell members. These bonding lines are a critical design constraint of the blades as a significant number of turbine blade field failures occur at the bond-line. Separation of the bond line along the leading and/or trailing edges of an operational turbine blade can result in a catastrophic failure and damage to the wind turbine.

In addition, the methods used to manufacture the rotor blades and/or structural components thereof can be difficult to control, defect prone, and/or highly labor intensive due to handling of the dry fabrics and the challenges of infusing large laminated structures. Moreover, as rotor blades continue to increase in size, conventional manufacturing methods continue to increase in complexity as the blade halves are typically manufactured using opposing mold halves that must be large enough to accommodate the entire length of the rotor blade. As such, joining the large blade halves can be highly labor intensive and more susceptible to defects.

One known strategy for reducing the complexity and costs associated with preforming, transporting, and erecting wind turbines having rotor blades of increasing sizes is to manufacture the rotor blades in blade segments. The blade segments may then be assembled to form the rotor blade. However, known joint designs for connecting the blade segments together typically have a variety of disadvantages. For example, many known joint designs do not provide for sufficient alignment of the blade segments. As such, a significant amount of time is wasted in aligning the blade segments for assembly of the rotor blade. Additionally, many known joint designs include various complex interconnecting components, thereby increasing the amount of time needed to assemble the blade segments. In addition, segmented blades are typically heavier than blades manufactured using conventional methods due to the additional joints and/or related parts. Further, each of the segments is still manufactured using blade halves that are bonded together at leading and trailing edges, which as mentioned, is a critical design constraint.

Rotor blades of a wind turbine are disclosed, for example, in US 2014/140855 A1, US 2014/271217 A1, and US 2011/103962 A1.

Thus, the art is continuously seeking new and improved rotor blades and related methods that address the aforementioned issues. Accordingly, the present invention is directed to a modular rotor blade for a wind turbine according to claim 1.

Various aspects and advantages of the invention will be set forth in part in the following description.

In one aspect, the present disclosure is directed to a modular rotor blade for a wind turbine according to claim 1.

In one embodiment, the rotor blade may also include at least one pressure side segment and at least one suction side segment. According to the invention, the blade root comprises one or more spar caps extending in a generally span-wise direction. Similarly, the blade tip section may include one or more corresponding spar caps extending in a generally span-wise direction. Thus, in certain embodiments, the blade root section and the blade tip section may be joined together via their respective spar cap(s). In additional embodiments, the blade root section may further include one or more shear webs configured between the one or more spar caps.

According to the invention, the rotor blade comprises a plurality of leading edge segments and a plurality of trailing edge segments. In additional embodiments, the rotor blade may also include a structural component secured to the blade root section. In addition, in particular embodiments, the structural component may be configured with the trailing edge segment(s).

In certain embodiments, the leading edge segments and the trailing edge segments may be configured to overlap at the pressure side seam and the suction side seam. In addition, adjacent leading edge segments as well as adjacent trailing edge segments may be configured to overlap. Thus, in specific embodiments, the rotor blade may also include an adhesive configured between the overlapping leading and trailing edge segments and/or the overlapping adjacent leading or trailing edge segments.

In yet another embodiment, the leading edge segments and the trailing edge segments may be constructed of any suitable material that allows for the desired shape and characteristics of the corresponding component. More specifically, in certain embodiments, the leading edge segments and/or the trailing edge segments may be constructed, at least in part, of a thermoset polymer, a thermoplastic polymer, or similar.

In another aspect, the present disclosure is directed to a non-claimed modular rotor blade for a wind turbine. The rotor blade includes a pre-formed blade root section having one or more continuous spar caps extending in a generally span-wise direction, a pre-formed blade tip, and at least one blade segment arranged between the blade root section and the blade tip section. In addition, the blade segment includes a chord-wise cross-section defining a single, continuous blade surface.

In one embodiment, the single, continuous blade surface is non-jointed. In another embodiment, the blade segment(s) includes a single joint at a trailing edge thereof. In certain embodiments, the blade segment(s) may be constructed, at least in part, of either a thermoset polymer or a thermoplastic polymer.

In yet another aspect, the present disclosure is directed to a non-claimed modular rotor blade for a wind turbine. The rotor blade includes a pre-formed blade root section having one or more continuous spar caps extending in a generally span-wise direction, a pre-formed blade tip section, and at least one blade segment arranged between the blade root section and the blade tip section. In addition, the at least one blade segment includes a chord-wise cross-section having multiple joints, wherein at least one joint is located on at least one of a pressure side surface or a suction side surface.

In one embodiment, the blade segment(s) may be constructed, at least in part, of at least one of a thermoset polymer, a thermoplastic polymer, or similar. In another embodiment, the blade segment(s) may include at least one leading edge segment and at least one trailing edge segment joined at a pressure side seam and a suction side seam. More specifically, in certain embodiments, the leading edge segment may include a forward pressure side surface and a forward suction side surface and the trailing edge segment may include an aft pressure side surface and an aft suction side surface. In further embodiments, the leading edge and trailing edge segment(s) may overlap at the pressure side seam and the suction side seam. Thus, in certain embodiments, the rotor blade may include an adhesive configured between the overlapping leading and trailing edge segments.

In further embodiments, the modular rotor blade may include at least one pressure side segment and at least one suction side segment, e.g. joined leading and trailing edges via suitable joints.

In another embodiment, the blade segment(s) may include at least one forward pressure side segment, at least one forward suction side segment, at least one aft pressure side segment, and at least one aft suction side segment. In such an embodiment, the blade segment(s) are generally segmented into four quadrants that can be joined together via four joints.

In still further embodiments, the blade segment(s) may include a generally J-shaped blade segment and at least one of an aft pressure side surface or an aft suction side surface, e.g. joined together at multiple joints. In additional embodiments, the blade root section may also include one or more shear webs configured between the one or more continuous spar caps.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to the present disclosure;
FIG. 2 illustrates a perspective view of one embodiment of a modular rotor blade of a wind turbine according to the present disclosure;
FIG. 3 illustrates an exploded view of the modular rotor blade of FIG. 2;
FIG. 4 illustrates a cross-sectional view of one embodiment of a leading edge segment of a modular rotor blade according to the present disclosure;
FIG. 5 illustrates a cross-sectional view of one embodiment of a trailing edge segment of a modular rotor blade according to the present disclosure;
FIG. 6 illustrates a cross-sectional view of the modular rotor blade of FIG. 2 according to the present disclosure along line 6-6;
FIG. 7 illustrates a cross-sectional view of the modular rotor blade of FIG. 2 according to the present disclosure along line 7-7;
FIG. 8 illustrates a cross-sectional view of another embodiment of a modular rotor blade according to the present disclosure, particularly illustrating a blade segment having overlapping pressure and suction side seams;
FIG. 9 illustrates a cross-sectional view of another embodiment of a modular rotor blade according to the present disclosure, particularly illustrating a non-jointed, continuous blade segment;
FIG. 10 illustrates a cross-sectional view of another embodiment of a modular rotor blade according to the present disclosure, particularly illustrating a single-jointed blade segment;
FIG. 11 illustrates a cross-sectional view of one embodiment of a modular rotor blade according to the present disclosure, particularly illustrating a plurality of blade segments joined together via multiple joints;
FIG. 12 illustrates a cross-sectional view of another embodiment of a modular rotor blade according to the present disclosure, particularly illustrating a plurality of blade segments joined together via multiple joints;
FIG. 13 illustrates a flow diagram of a method for assembling a modular rotor blade according to the present disclosure;
FIGS. 14-17 illustrates various schematic diagrams of one embodiment of a method for assembling a modular rotor blade of a wind turbine according to the present disclosure, particularly illustrating assembly steps that may be completed in the factory;
FIG. 18 illustrates a perspective view of one embodiment of a fixture assembly used to assemble various rotor blade components of a wind turbine according to the present disclosure; and
FIG. 19 illustrates a schematic diagram of one embodiment of a method for assembling a rotor blade of a wind turbine according to the present disclosure, particularly illustrating assembly steps that may be completed in the field, e.g. at a wind turbine site.

Reference now will be made in detail to embodiments of the invention, one or more examples of which are illustrated in the drawings. Each example is provided by way of explanation of the invention, not limitation of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to a modular rotor blade for a wind turbine according to claim 1 and to non-claimed methods of assembling same. In certain embodiments, the rotor blade includes a pre-formed blade root section, a pre-formed blade tip section, and one or more blade segments mounted between the blade root section and the blade tip section in a generally span-wise direction. According to the invention, the blade segments include a plurality of leading edge segments and a plurality of trailing edge segments. In certain embodiments, the blade segments may include one or more pressure side segments, suction side segments, a forward pressure side segment, a forward suction side segment, an aft pressure side segment, an aft suction side segment, or a non-jointed continuous blade segment. Further, the blade root section and the blade tip section each include one or more spar caps. Thus, the blade root section and the blade tip section may be joined together via their respective spar caps.

Thus, the present disclosure provides many advantages not present in the prior art. For example, the present disclosure provides a modular rotor blade having multiple blade segments and/or components that can each be individually pre-formed before assembly of the blade. Thus, the blade segments reduce the number of bond lines and shift the bond lines away from the leading and/or trailing edge regions. In addition, the number of scarf joints or similar can be reduced. Further, the modular rotor blades as described herein may increase supply chain options, may reduce assembling cycle time, and/or may reduce shipping cost. Thus, the rotor blades and methods of the present disclosure provide an economic alternative to conventional rotor blades. Further, the rotor blades of the present disclosure can have a reduced weight.

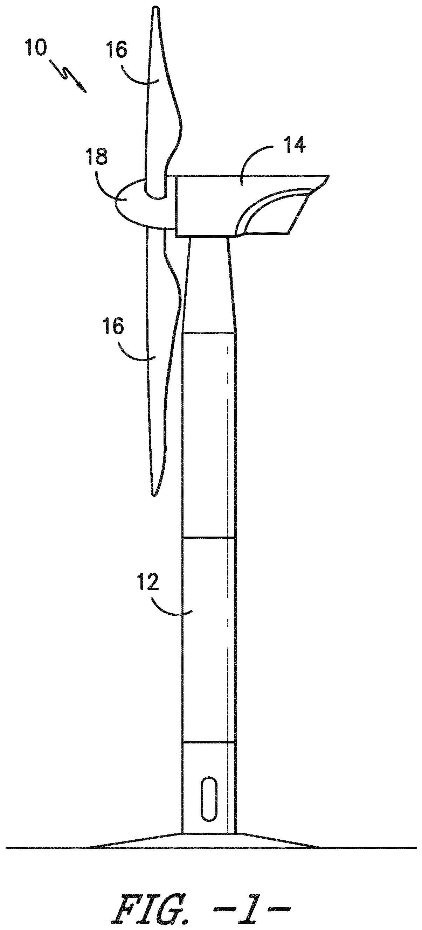

Referring now to the drawings, FIG. 1 illustrates one embodiment of a wind turbine 10 according to the present disclosure. As shown, the wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application having rotor blades.

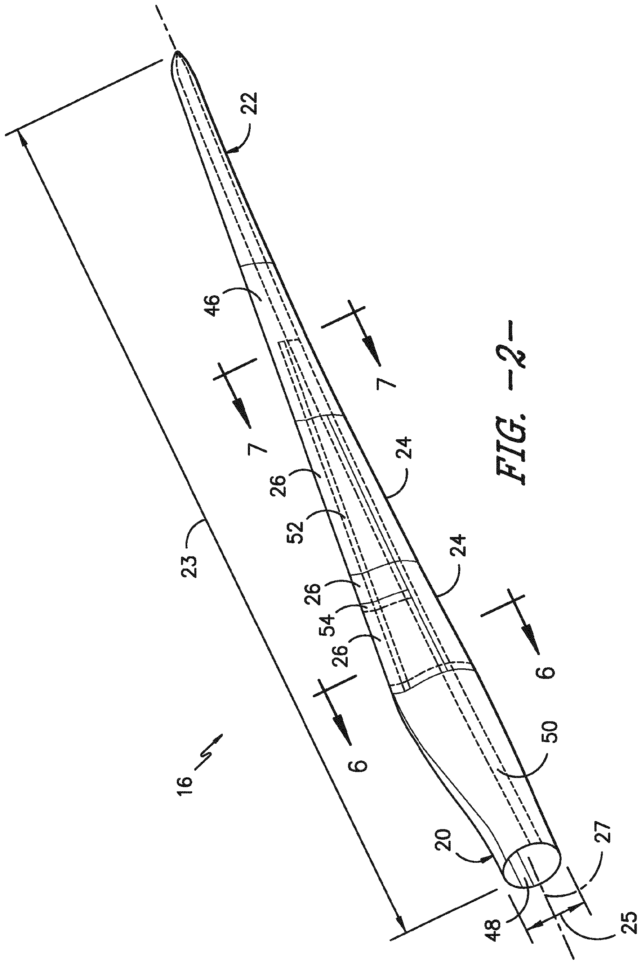

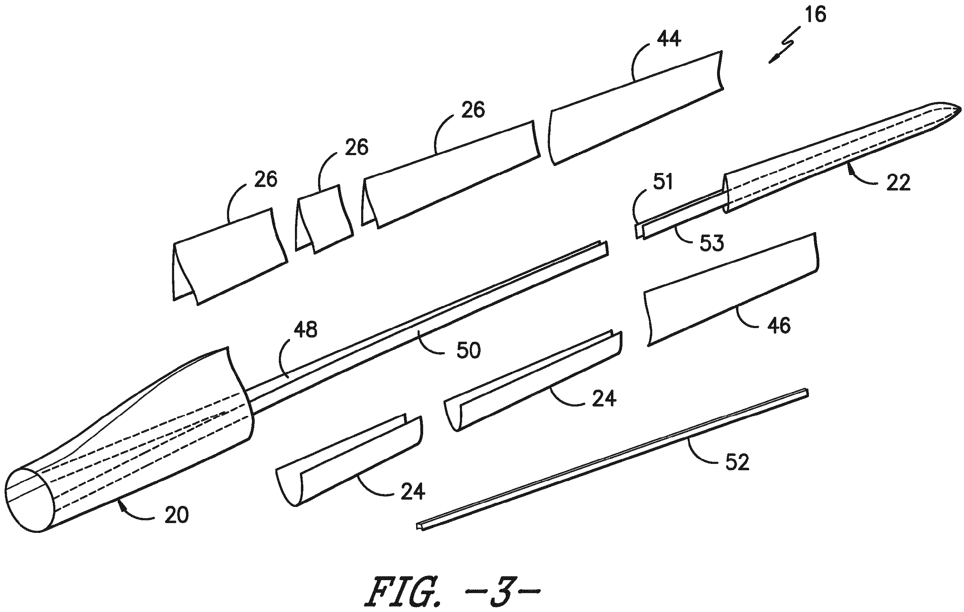

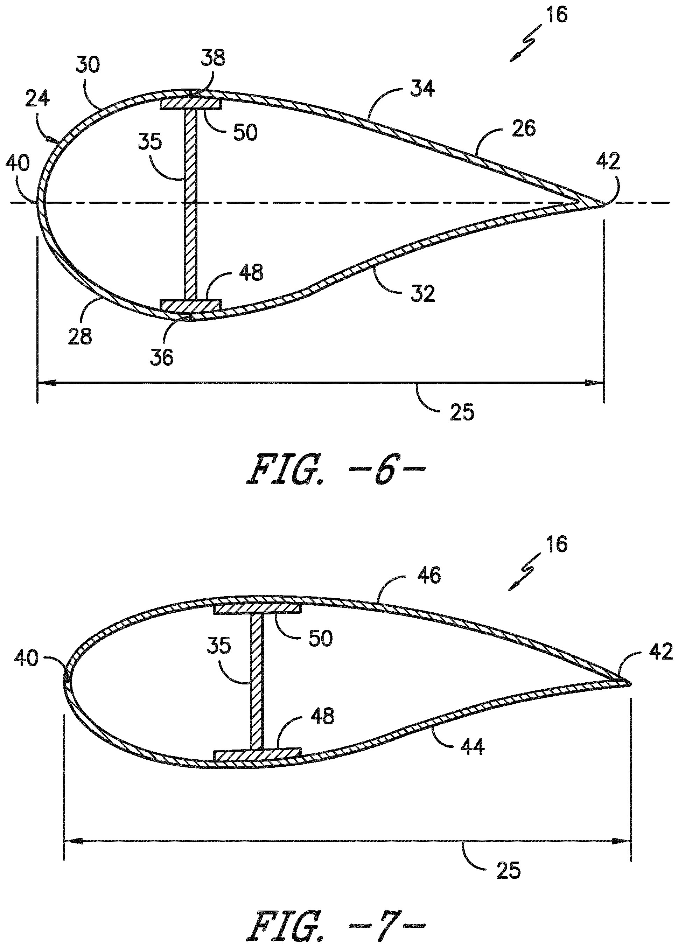

Referring now to FIGS. 2 and 3, various views of a modular rotor blade 16 manufactured according to the present disclosure are illustrated. As shown, the rotor blade 16 includes a modular configuration having a pre-formed blade root section 20, a pre-formed blade tip section 22 disposed opposite the blade root section 20, and a plurality of blade segments arranged therebetween. The blade root section 20 is configured to be mounted or otherwise secured to the rotor 18 (FIG. 1). Further, as shown in FIG. 2, the rotor blade 16 defines a span 23 that is equal to the total length between the blade root section 20 and the blade tip section 22. In addition, as shown in FIGS. 2 and 6, the rotor blade 16 defines a chord 25 that is equal to the total length between a leading edge 40 of the rotor blade 16 and a trailing edge 42 of the rotor blade 16. As is generally understood, the chord 25 may generally vary in length with respect to the span 23 as the rotor blade 16 extends from the blade root section 20 to the blade tip section 22.

In addition, as shown in the illustrated embodiment, the blade segments may include a plurality of leading edge segments 24 and a plurality of trailing edge segments 26 generally arranged between the blade root section 20 and the blade tip section 22 along a longitudinal axis 27 in a generally span-wise direction. Thus, the leading and trailing edge segments 24, 26 generally serve as the outer casing/covering of the rotor blade 16 and may define a substantially aerodynamic profile, such as by defining a symmetrical or cambered airfoil-shaped cross-section. In additional embodiments, it should be understood that the blade segment portion of the blade 16 may include any combination of the segments described herein and are not limited to the embodiment as depicted.

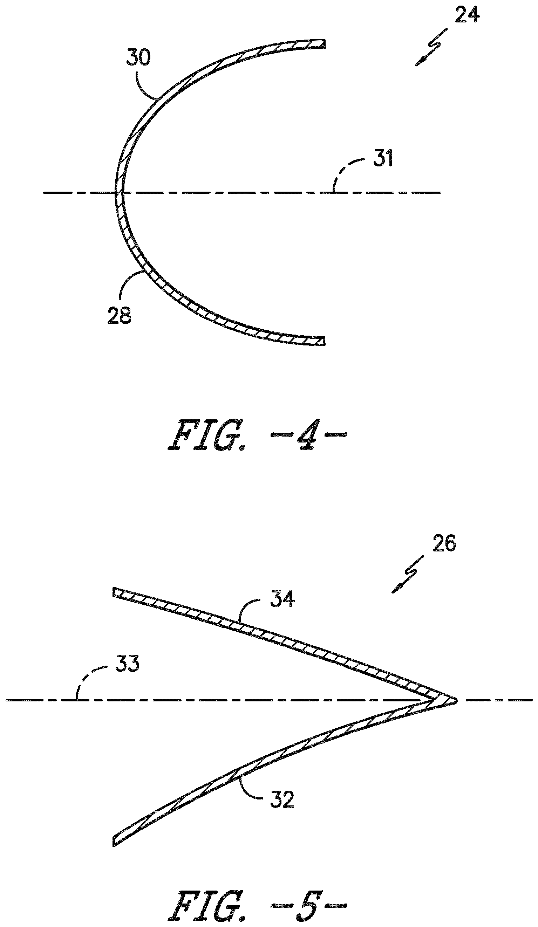

Referring now to FIG. 4, each of the leading edge segments 24 has a forward pressure side surface 28 and a forward suction side surface 30. Similarly, as shown in FIG. 5, each of the trailing edge segments 26 has an aft pressure side surface 32 and an aft suction side surface 34. In addition, as particularly shown in FIG. 6, the leading edge segment(s) 26 and the trailing edge segment(s) 26 may be joined at a pressure side seam 36 and a suction side seam 38. Thus, the forward pressure side surface 28 of the leading edge segment 24 and the aft pressure side surface 32 of the trailing edge segment 26 generally define a pressure side surface of the rotor blade 16. Similarly, the forward suction side surface 30 of the leading edge segment 24 and the aft suction side surface 34 of the trailing edge segment 26 generally define a suction side surface of the rotor blade 16.

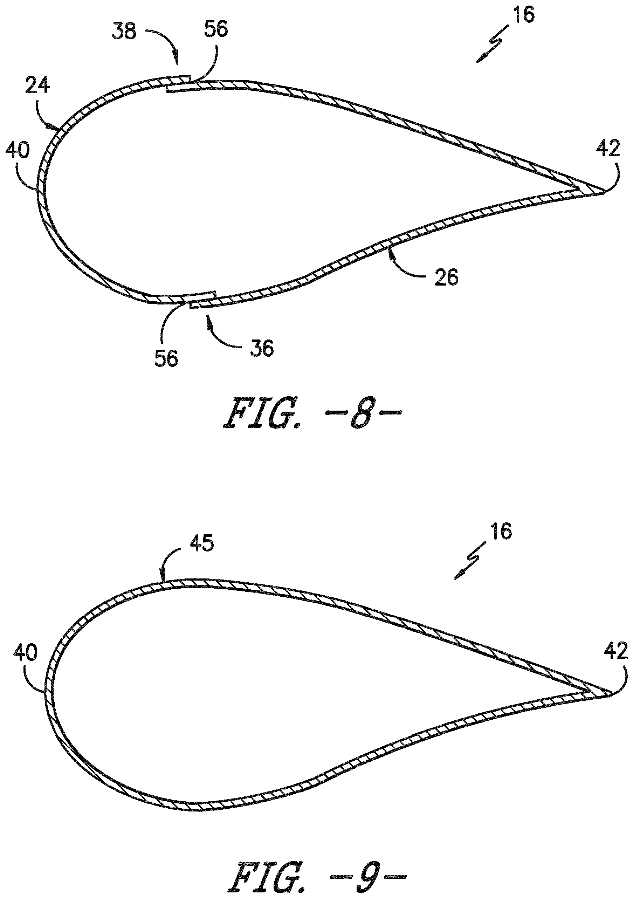

In further embodiments, as shown in FIG. 8, the leading edge segment(s) 24 and the trailing edge segment(s) 26 may be configured to overlap at the pressure side seam 36 and/or the suction side seam 38. In addition, as shown in FIG. 2, adjacent leading edge segments 24 as well as adjacent trailing edge segments 26 may be configured to overlap at a seam 54. More specifically, in certain embodiments, the various segments of the rotor blade 16 may be further secured together, e.g. via an adhesive 56 configured between the overlapping leading and trailing edge segments 24, 26 and/or the overlapping adjacent leading or trailing edge segments 24, 26.

In addition, the pressure side seam 26 and/or the suction side seam 38 may be located at any suitable chord-wise location. For example, as shown in FIGS. 6 and 8, the seams 36, 38 may be located from about 40% to about 60% chord from the leading edge 40 of the rotor blade 16. More specifically, in certain embodiments, the seams 36, 38 may be located at about 50% chord from the leading edge 40. In still further embodiments, the seams 36, 38 may be located less than 40% chord or greater than 60% chord from the leading edge 40 of the rotor blade 16. In addition, in some embodiments, the seams 36, 38 may be aligned as generally shown in the figures. Alternatively, the seams 36, 38 may be offset.

In additional embodiments, as shown in FIGS. 3 and 7, the rotor blade 16 may also include at least one pressure side segment 44 and/or at least one suction side segment 46. For example, as shown in FIG. 7, the rotor blade 16 may include a pressure side segment 44 arranged and joined with a suction side segment 46 at the leading and trailing edges 40, 42. Such segments may be used in combination with and/or exclusive of the additional segments as described herein.

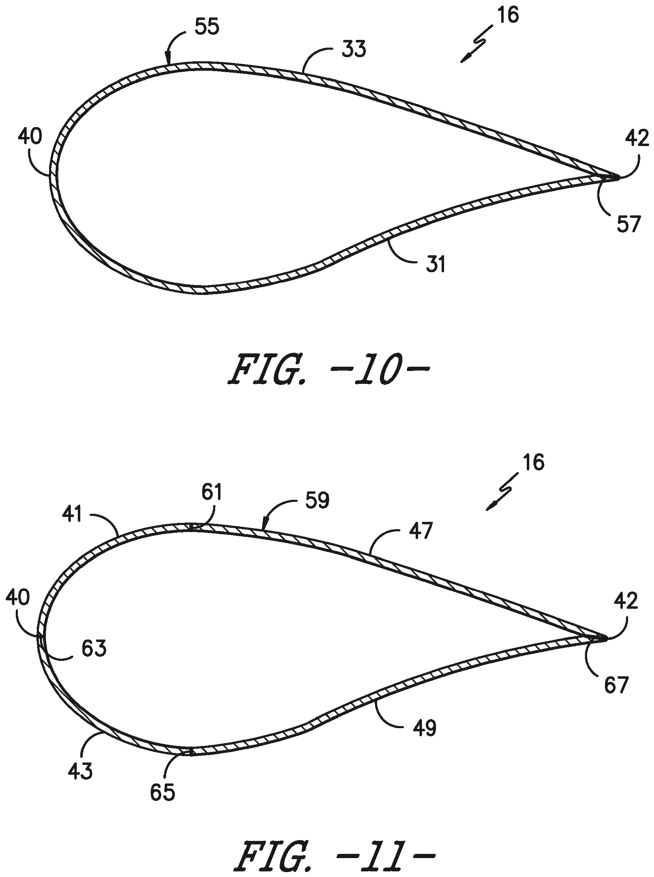

Thus far, the segments described herein are joined at two joint locations. Although, in non-claimed embodiments, less than two or more than two joint locations may be utilized. For example, as shown in FIG. 9, the rotor blade 16 may also include a non-jointed, continuous blade surface 45. More specifically, as shown, the non-jointed, continuous blade surface 45 does not require bonding of multiple segments. Such segments 45 may be used in combination with and/or exclusive of the additional segments as described herein. Further, as shown in FIG. 10, the rotor blade 16 may also include a blade segment having a single-jointed blade surface 55. More specifically, as shown, the single-jointed blade surface 55 may include a pressure side surface 33, a suction side surface 31, and a single joint 57 at the trailing edge 42. Thus, the single-jointed blade surface 55 only requires one joint instead of multiple joints. Such segments 55 may be used in combination with and/or exclusive of the additional segments as described herein.

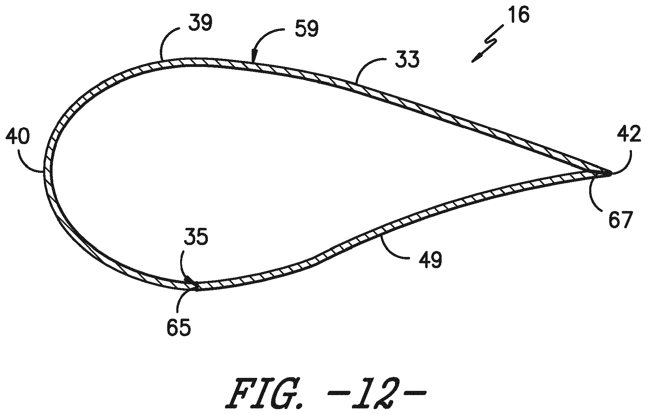

Moreover, as shown in FIGS. 11 and 12, the rotor blade 16 may also include a multi-jointed blade surface 59. More specifically, as shown in FIG. 11, the multi-jointed blade surface 59 may include a plurality of segments 41, 43, 47, 49 joined together via multiple joints 61, 63, 65, 67 spaced about the cross-section of the blade segment 59. For example, as shown, the segments 41, 43, 47, 49 may include a forward pressure side segment 43, a forward suction side segment 41, an aft pressure side segment 49, and an aft suction side segment 47. In another embodiment, as shown in FIG. 12, the blade segment 59 may include a generally J-shaped blade segment 39 and an additional blade segment, e.g. aft pressure side segment 49 or aft suction side segment 47, joined together via joints 65 and 67. More specifically, as shown, the J-shaped blade segment 39 may extend from the trailing edge 42 around the suction side surface 33 to a pressure side seam 35. Such segments may be used in combination with and/or exclusive of the additional segments as described herein.

Referring now to FIGS. 2-3 and 6-7, the rotor blade 16 may also include one or more longitudinally extending spar caps configured to provide increased stiffness, buckling resistance and/or strength to the rotor blade 16. For example, the blade root section 20 may include one or more longitudinally extending spar caps 48, 50 configured to be engaged against the opposing inner surfaces of the blade segments of the rotor blade 16. Similarly, the blade tip section 22 may include one or more longitudinally extending spar caps 51, 53 configured to be engaged against the opposing inner surfaces of the blade of the rotor blade 16. In addition, blade tip section 22 and/or the blade root section 20 may also include one or more shear webs 35 configured between the one or more spar caps 48, 50, 51, 53 of the blade root section 20 or the blade tip section 22, respectively. As such, the shear web(s) 35 are configured to increase the rigidity in the blade root section 20 and/or the blade tip section 22, thereby allowing the sections 20, 22 to be handled with more control.

More specifically, in particular embodiments, the blade root section 20 and/or the blade tip section 22 may be pre-formed with the one or more spar caps 48, 50, 51, 53.

Further, the blade root spar caps 48, 50 may be configured to align with the blade tip spar caps 51, 53. Thus, the spar caps 48, 50, 51, 53 may generally be designed to control the bending stresses and/or other loads acting on the rotor blade 16 in a generally span-wise direction (a direction parallel to the span 23 of the rotor blade 16) during operation of a wind turbine 10. In addition, the spar caps 48, 50, 51, 53 may be designed to withstand the span-wise compression occurring during operation of the wind turbine 10. Further, the spar cap(s) 48, 50, 51, 53 may be configured to extend from the blade root section 20 to the blade tip section 22 or a portion thereof. Thus, in certain embodiments, the blade root section 20 and the blade tip section 22 may be joined together via their respective spar caps 48, 50, 51, 53.

In further embodiments, as shown in FIGS. 2, 3, 16, and 18, the rotor blade 16 may also include an additional structural component 52 secured to the blade root section 20 and extending in a generally span-wise direction. More specifically, the structural component 52 may extend any suitable distance between the blade root section 20 and the blade tip section 22. Thus, the structural component 52 is configured to provide additional structural support for the rotor blade 16 as well as an optional mounting structure for the various blade segments as described herein. For example, in certain embodiments, the structural component 52 may be secured to the blade root section 20 and may extend a predetermined span-wise distance such that the leading and/or trailing edge segments 24, 26 can be mounted thereto.

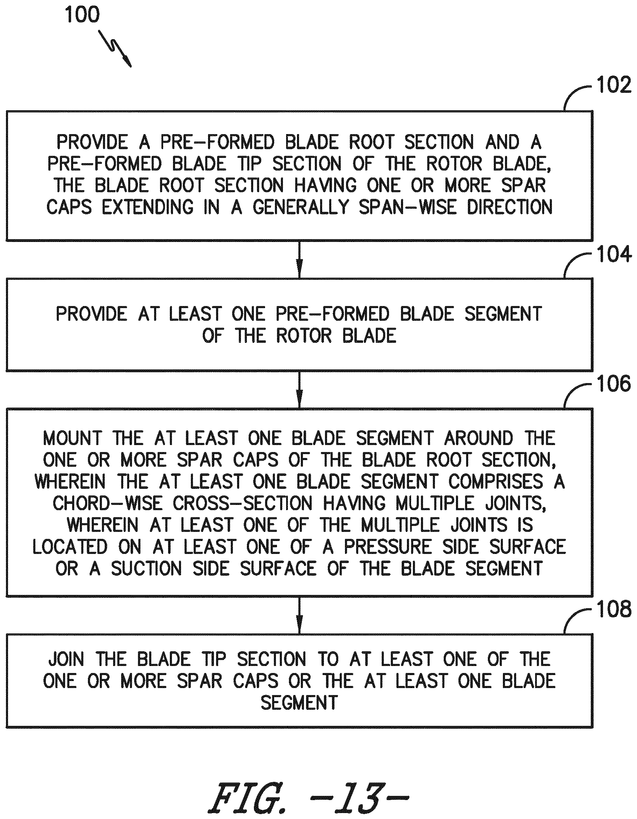

Referring now to FIGS. 13-19, various embodiments of assembling the modular rotor blade 16 as described herein are illustrated. For example, as shown in FIG. 13, a flow diagram of one embodiment of a non-claimed method 100 for assembling a modular rotor blade 16 according to the present disclosure is illustrated. As shown at 102, the method 100 includes providing a pre-formed a blade root section 20 and a pre-formed blade tip section 22 of the rotor blade. Further, as mentioned and shown generally in the figures, the blade root section 20 and optionally the blade tip section 22 each include one or more spar caps 48, 50, 51, 53 extending in a generally span-wise direction. In such embodiments, the blade root section 20 and the spar caps 48, 50 are manufactured (e.g. infused) in a single shot or mold so as to produce a uniform, integral part. Similarly, the blade tip section 22 and the one or more spar caps 51, 53 may be in a single shot so as to produce a uniform, integral part. In alternative embodiments, the blade tip section 22 may not include spar caps 51, 53.

As shown at 104, the method 100 may also include providing at least one pre-formed blade segment (e.g. segments 24, 26, 41, 43, 44, 45, 46, 47, or 49 as described herein) of the rotor blade 16. Further, as shown at 106, the method 100 may also include mounting one or more blade segments around the spar caps 48, 50 of the blade root section 20. More specifically, in certain embodiments, the blade segment(s) may have a chord-wise cross-section having multiple joints, with at least one of the multiple joints being located on either the pressure side surface or the suction side surface of the blade segment. Thus, in certain embodiments, the method 100 may include mounting leading and trailing edge segments 24, 26 between the blade root section 20 and the blade tip section 22 and joining the segments via the pressure and suction side seams 36, 38. In addition, the method 100 may include mounting at least one pressure side segment 44 and at least one suction side segment 46 between the blade root section 20 and the blade tip section 22 in a generally span-wise direction. In still further embodiments, where the blade segment is a single-jointed blade segment 55 (FIG. 10), the method 100 may include separating the pressure and suction side surfaces 31, 33 at the single joint 57, mounting the continuous blade segment 55 over the one or more spar caps 48, 50, and securing the continuous blade segment 55 between the blade root section 20 and the blade tip section 22 via an adhesive at the single joint 55.

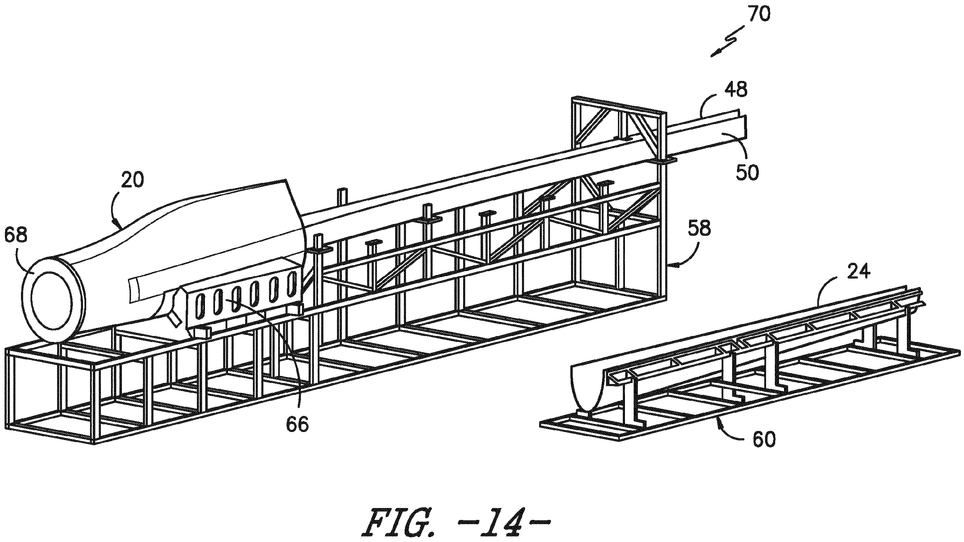

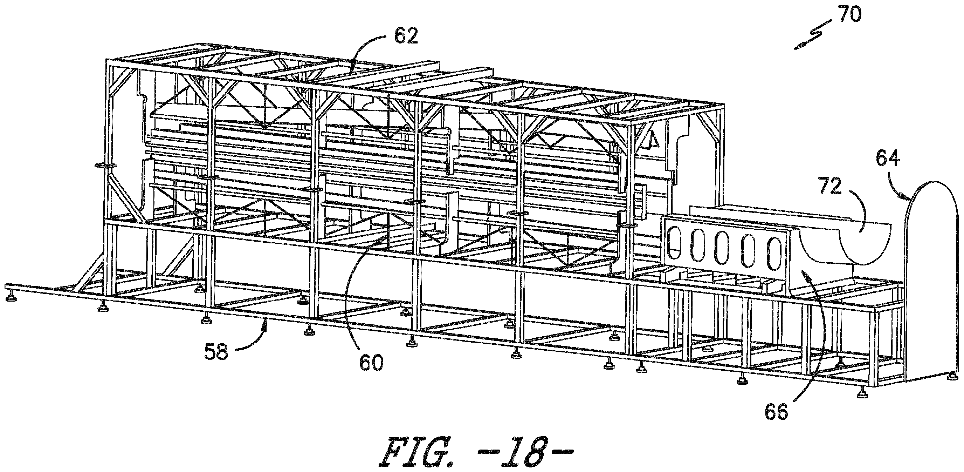

In particular embodiments, as shown in FIGS. 14-16, and 18, a non-claimed fixture apparatus 70 may be used to assemble the rotor blade 16. More specifically, the fixture apparatus 70 may be used to arrange and/or orient the blade segments of the rotor blade 16 such that the segments can be properly mounted between the blade root section 20 and the blade tip section 22. More specifically, as shown, the fixture apparatus 70 may include a main fixture assembly 58 that is configured to support and orient the blade root section 20, e.g. with the leading edge side down or vice versa. Further, in some embodiments, the main fixture assembly 58 may also include a blade root plate 64 configured to align a root end portion 68 of the blade root section 20 on the main fixture assembly 58. In addition, the main fixture assembly 58 may also include a root support structure 66 configured to support the root end portion 68 of the blade root section 20. In certain embodiments, as shown in FIG. 18 the root support structure 66 may further include a support pad 72 configured to provide further support and/or protection to the root end portion 68 of the blade root section 20.

In addition, as shown in FIGS. 14-16 and 18, the fixture apparatus may include a leading edge fixture assembly 60 that is configured to support and/or orient the leading edge segment(s) 24 relative to the blade root section 20. As such, the leading edge fixture assembly 60 may be installed onto the main fixture assembly 58, e.g. below the blade root section 20 when the blade root section 20 is installed onto the main fixture assembly 58. As such, the leading edge fixture assembly 60 allows the leading edge segment(s) 24 to be easily mounted between the blade root section 20 and the blade tip section 22 while the leading edge segment(s) 24 are held in place via the leading edge fixture assembly 60.

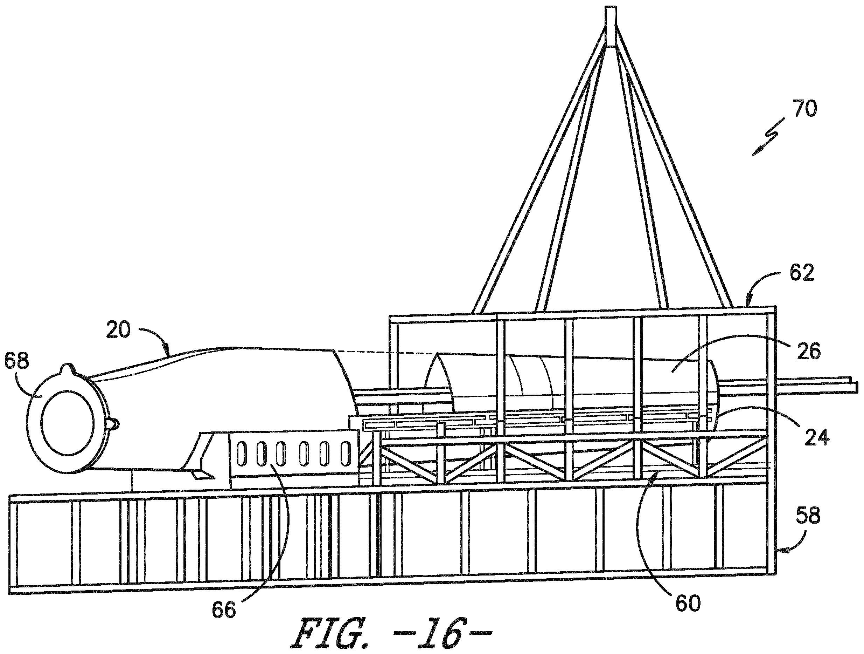

Similarly, as shown in FIGS. 14-16 and 18, the fixture apparatus 70 may also include a trailing edge fixture assembly 62 that is configured to support and/or orient the trailing edge segment(s) 26 relative to the blade root section 20. As such, the trailing edge segment(s) 26 can be loaded onto the trailing edge fixture assembly 62 and the fixture assembly 62 can be installed onto the main fixture assembly 58, e.g. above the blade root section 20 when the blade root section 20 is installed onto the main fixture assembly 58. For example, as shown in FIG. 16, the trailing edge fixture assembly 62 containing the trailing edge segment(s) 26 may be installed onto the main fixture assembly 58 above the blade root section 20 via a crane. As such, the trailing edge segment(s) may be mounted between the blade root section 20 and the blade tip section 22 while the trailing edge segment(s) 26 are held in place via the trailing edge fixture assembly 62. Thus, each of the fixture assemblies 58, 60, 62 may be used to support and arrange the various blade components/segments in a generally span-wise direction such that the components may be easily aligned and secured together to form the rotor blade 16.

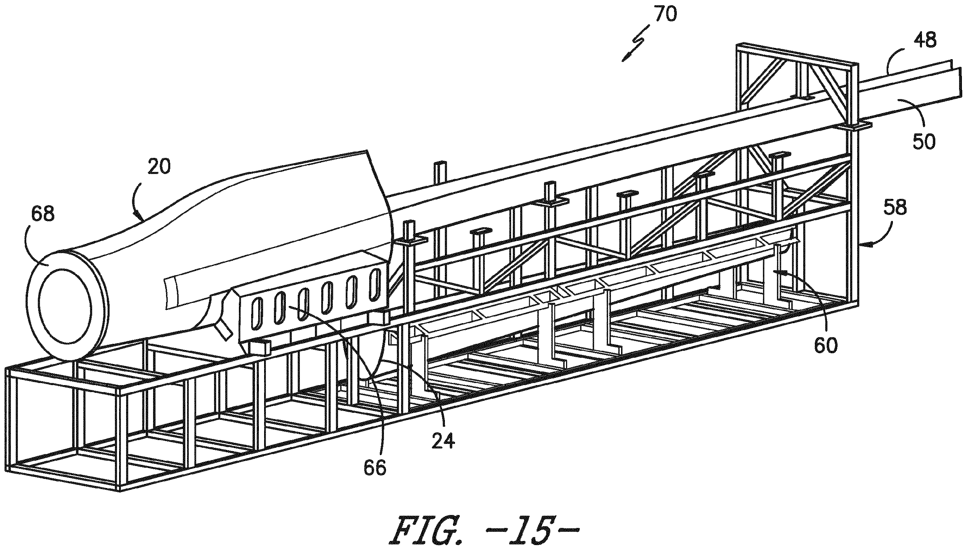

More specifically, in certain embodiments, the leading edge segment(s) 24 may be loaded onto and supported by the leading edge fixture assembly 60. Further, in particular embodiments, the leading edge segment(s) 24 may be joined together, e.g. via an adhesive, while being supported on the leading edge fixture assembly 60. In addition, as shown at FIG. 15, the leading edge fixture assembly 60 may be loaded onto the main fixture assembly 58, e.g. in a lower portion of the main fixture assembly 58. Thus, as shown at FIG. 16, the leading edge fixture assembly 60 may be lifted to the blade root section 20 so as to properly locate the leading edge segment(s) 24 relative to the blade root section 20. In addition, the trailing edge segment(s) 26 may be loaded onto the trailing edge fixture assembly 62. Further, in certain embodiments, one or more adjacent trailing edge segment(s) 26 may be joined together, e.g. via an adhesive, while being supported by the trailing edge fixture assembly 62. As such, the trailing edge fixture assembly 62 may be lowered onto the main fixture assembly 58, e.g. using a crane, such that one or more of the trailing edge segment(s) 26 may be properly oriented relative to the leading edge segment(s) 24.

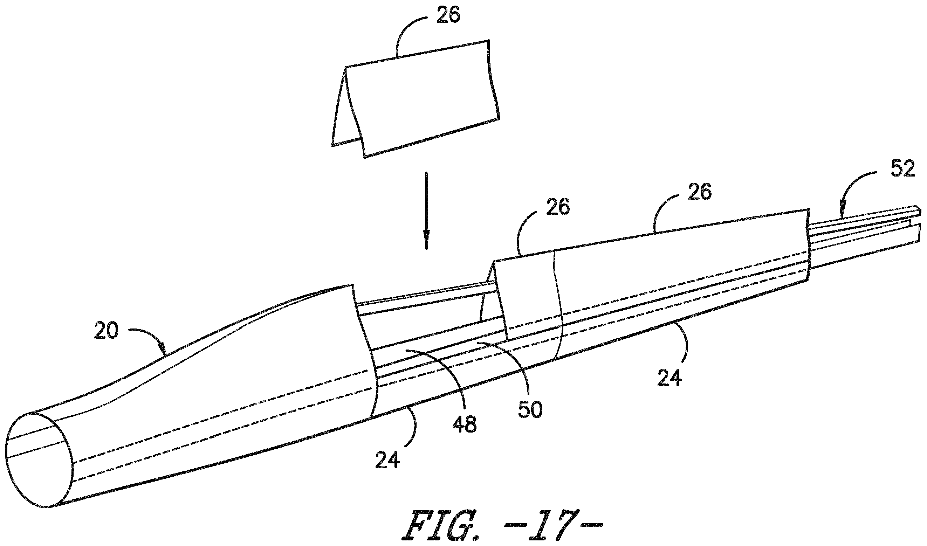

In additional embodiments, the method 100 may also include securing an additional structural component 52 to the blade root section 20 such that the structural component 52 extends in a generally span-wise direction. Thus, as shown at FIG. 17, the blade segments (e.g. the leading and trailing edge segments 24, 26) may be mounted to the structural component 52. For example, in one embodiment, the trailing edges segments 26 may be mounted to the structural component 52 of the blade root section 20 and the leading edge segments 24 may be mounted to the trailing edge segments 26, e.g. by overlapping the trailing edge segments 26 at seams 36, 38. In alternative embodiments, any of the blade segments as described herein may be similarly mounted to the structural component 52 of the blade root section 20 in a span-wise direction.

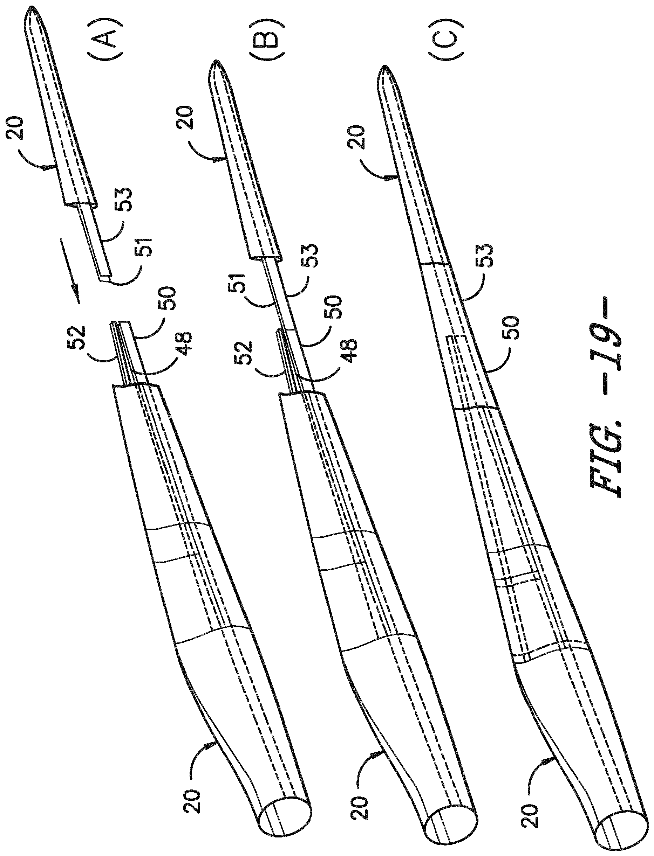

Thus, as shown at 108 of FIG. 13, the method 100 may also include joining the blade tip section 20 to either or both of the spar caps 51, 53 and/or one of the blade segments so as to form the modular rotor blade 16, as shown in FIG. 19(A) and (B). In addition, the method 100 may also include mounting one or more shear webs 35 between the one or more spar caps 48, 50, 51, 53 of the blade root section 20 or the blade tip section 22 before, for example, the step of mounting the at least one blade segment between the blade root section 20 and the blade tip section 22. As such, the shear web(s) are configured to increase the rigidity in the blade root section 20 and/or the blade tip section 22.

Accordingly, once the blade root section 20 has been joined to the blade tip section 22 (and remaining internal connections of the rotor blade 16 are complete) the remaining closeout segments (e.g. pressure and suction side segments 44 and 46) may be installed over the tip-root connection to complete the rotor blade 16, e.g. as shown in FIG. 19(C).

This written description uses examples to disclose the invention, including the preferred mode, and also to enable any person skilled in the art to practice the invention.

The patentable scope of the invention is defined by the claims, and may include other examples that occur to those skilled in the art.

## Claims

1. A modular rotor blade (16) for a wind turbine (10), the rotor blade (16) comprising:
a pre-formed blade root section (20), wherein the blade root section (20) comprises one or more spar caps (48, 50) extending in a generally span-wise direction, wherein the blade root section is integrally manufactured with the spar caps in a single shot or mold;
a blade tip section (22);
a plurality of leading edge segments (24) comprising a forward pressure side surface (28) and a forward suction side surface (30); and
a plurality of trailing edge segments (26) comprising an aft pressure side surface (32) and an aft suction side surface (34),
wherein the leading edge segments (24) and the trailing edge segments (26) are arranged between the blade root section (20) and the blade tip section (22) in a generally span-wise direction, and wherein the leading edge segments (24) are joined with the trailing edge segments (26) at a pressure side seam (36) and a suction side seam (38).

2. The rotor blade (16) of claim 1, further comprising at least one pressure side segment (44) and at least one suction side segment (46).

3. The rotor blade (16) of claim 1, wherein the blade root section (20) further comprises one or more shear webs (35) configured between the one or more spar caps (48, 50).

4. The rotor blade (16) of claim 1 or claim 3, wherein the blade tip section (22) comprises one or more spar caps (51, 53) extending in a generally span-wise direction, wherein the blade root section (20) and the blade tip section (22) are joined together via their respective spar caps (48, 50, 51, 53).

5. The rotor blade (16) of any preceding claim, wherein the leading edge segments (24) and the trailing edge segments (26) overlap at the pressure side seam (36) and the suction side seam (38).

6. The rotor blade (16) of any preceding claim, wherein the leading edge segments (24) and the trailing edge segments (26) are constructed, at least in part, of at least one of a thermoset polymer or a thermoplastic polymer.

## Patentansprüche

1. Ein modulares Rotorblatt (16) für eine Windturbine (10), wobei das Rotorblatt (16) Folgendes umfasst:
einen vorgeformten Blattwurzelabschnitt (20), wobei der Blattwurzelabschnitt (20) einen oder mehrere Gurte (48, 50) umfasst, die sich im Allgemeinen in Spannweitenrichtung erstrecken, wobei der Blattwurzelabschnitt einstückig mit den Gurten in einem einzelnen Spritzvorgang oder in einer einzelnen Form hergestellt wird;
einen Blattspitzenabschnitt (22);
eine Vielzahl von Vorderkantensegmenten (24) umfassend eine vordere Druckseitenfläche (28) und eine vordere Saugseitenfläche (30); und
eine Vielzahl von Hinterkantensegmenten (26) umfassend eine hintere Druckseitenfläche (32) und eine hintere Saugseitenfläche (34),
wobei die Vorderkantensegmente (24) und die Hinterkantensegmente (26) zwischen dem Blattwurzelabschnitt (20) und dem Blattspitzenabschnitt (22) in einer im Allgemeinen Spannweitenrichtung angeordnet sind, und wobei die Vorderkantensegmente (24) mit dem Hinterkantensegmenten (26) an einer Druckseitennaht (36) und einer Saugseitennaht (38) verbunden sind.

2. Das Rotorblatt (16) des Anspruchs 1, ferner umfassend mindestens ein Druckseitensegment (44) und mindestens ein Saugseitensegment (46).

3. Das Rotorblatt (16) des Anspruchs 1, wobei der Blattwurzelabschnitt (20) ferner einen oder mehrere Stege (35) umfasst, die zwischen dem einen oder den mehreren Gurten (48, 50) konfiguriert sind.

4. Das Rotorblatt (16) des Anspruchs 1 oder des Anspruchs 3, wobei der Blattspitzenabschnitt (22) einen oder mehrere Gurte (51, 53) umfasst, die sich im Allgemeinen in einer Spannweitenrichtung erstrecken, wobei der Blattwurzelabschnitt (20) und der Blattspitzenabschnitt (22) über ihre jeweiligen Gurte (48, 50, 51, 53) miteinander verbunden sind.

5. Das Rotorblatt (16) von einem der vorhergehenden Ansprüche, wobei sich die Vorderkantensegmente (24) und die Hinterkantensegmente (26) an der Druckseitennaht (36) und der Saugseitennaht (38) überlappen.

6. Das Rotorblatt (16) von einem der vorhergehenden Ansprüche, wobei die Vorderkantensegmente (24) und die Hinterkantensegmente (26) zumindest teilweise aus zumindest einem aus einem duroplastischen Polymer oder einem thermoplastisches Polymer hergestellt sind.

## Revendications

1. Une pale de rotor modulaire (16) pour une éolienne (10), la pale de rotor (16) comprenant :
une section de racine de pale préformée (20), dans laquelle la section de racine de pale (20) comprend un ou plusieurs capuchons de longeron (48, 50) s'étendant dans une direction généralement d'envergure, dans laquelle la section de racine de pale est réalisée de manière intégrale avec les capuchons de longeron dans une seule charge d'injection ou dans un seul moule ;
une section d'extrémité de pale (22) ;
une pluralité de segments de bord d'attaque (24) comprenant une surface avant côté pression (28) et une surface avant côté aspiration (30); et
une pluralité de segments de bord de fuite (26) comprenant une surface arrière côté pression (32) et une surface arrière côté aspiration (34),
dans laquelle les segments de bord d'attaque (24) et les segments de bord de fuite (26) sont agencés entre la section de racine de pale (20) et la section de pointe de pale (22) dans une direction généralement d'envergure, et dans laquelle les segments de bord d'attaque (24) sont reliés avec les segments de bord de fuite (26) au niveau d'une couture côté pression (36) et d'une couture côté aspiration (38).

2. La pale de rotor (16) de la revendication 1, comprenant en outre au moins un segment côté pression (44) et au moins un segment côté aspiration (46).

3. La pale de rotor (16) de la revendication 1, dans laquelle la section de racine de pale (20) comprend en outre une ou plusieurs âmes de cisaillement (35) configurées entre le ou les plusieurs capuchons de longeron (48, 50).

4. La pale de rotor (16) de la revendication 1 ou de la revendication 3, dans laquelle la section de pointe de pale (22) comprend un ou plusieurs capuchons de longeron (51, 53) s'étendant dans une direction généralement d'envergure, dans laquelle la section de racine de pale (20) et la section de pointe de pale (22) sont reliées par leurs capuchons de longeron respectifs (48, 50, 51, 53).

5. La pale de rotor (16) de l'une quelconque des revendications précédentes, dans laquelle les segments de bord d'attaque (24) et les segments de bord de fuite (26) se chevauchent au niveau du joint côté pression (36) et du joint côté aspiration (38).

6. La pale de rotor (16) de l'une quelconque des revendications précédentes, dans laquelle les segments de bord d'attaque (24) et les segments de bord de fuite (26) sont construits, au moins en partie, en au moins l'un parmi un polymère thermodurcissable ou un polymère thermoplastique.
